# EUROPÄISCHE PATENTSCHRIFT

(11) **EP 4 321 751 B1**
(45) Veröffentlichungstag und Bekanntmachung des Hinweises auf die Patenterteilung: **11.11.2026**
(21) Anmeldenummer: 22189550.1
(22) Anmeldetag: 09.08.2022
(51) Int. Cl.: F03D 17/00

(54) **VERFAHREN ZUM BESTIMMEN EINER BLATTFEHLSTELLUNG EINES ROTORBLATTES EINES ROTORS EINER WINDENERGIEANLAGE**
METHOD FOR DETECTING AN INCORRECT ORIENTATION OF A ROTOR BLADE OF A WIND TURBINE
PROCÉDÉ DE DÉTERMINATION D'UN DÉFAUT D'ORIENTATION D'UNE PALE DE ROTOR D'UNE ÉOLIENNE

(43) Veröffentlichungstag der Anmeldung: 14.02.2024
(73) Patentinhaber: Wobben Properties GmbH, 26607 Aurich (DE)
(72) Erfinder: Schaper, Ulf, 27254 Staffhorst (DE); de Boer, Wolfgang, 26802 Moormerland (DE); Gäbel, Dennis, 49777 Klein Berssen (DE); Kuhlemann, Rainer, 26810 Westoverledingen (DE); Laska, Wenzel, 26605 Aurich (DE)
(74) Vertreter: Eisenführ Speiser

(56) Entgegenhaltungen:
- WO-A1-2016/091254
- CASELITZ P ET AL: "Rotor condition monitoring for improved operational safety of offshore wind energy converters", JOURNAL OF SOLAR ENERGY ENGINEERING, ASME INTERNATIONAL, US, vol. 127, no. 2, 1 May 2005 (2005-05-01), pages 253 - 261, XP008084934, ISSN: 0199-6231, DOI: 10.1115/1.1850485

## Beschreibung

Die vorliegende Erfindung betrifft ein Verfahren zum Bestimmen wenigstens einer Blattfehlstellung eines Rotorblattes eines Rotors einer Windenergieanlage. Außerdem betrifft die vorliegende Erfindung eine Windenergieanlage, in der ein solches Verfahren implementiert ist.

Moderne Windenergieanlagen weisen Rotorblätter auf, die in ihrem Blattwinkel verstellbar sind. Dadurch kann der Blattwinkel an entsprechende Betriebssituationen angepasst werden, wie bspw. bei hohen Windgeschwindigkeiten, die oberhalb einer Nennwindgeschwindigkeit liegen, die Rotorblätter teilweise aus dem Wind zu drehen. Je stärker der Wind wird, umso weiter können die Rotorblätter herausgedreht werden.

Besonders im Teillastbetrieb, wenn die Windgeschwindigkeit unterhalb einer Nennwindgeschwindigkeit ist, wird eine Windenergieanlage häufig mit einem fest eingestellten oder zumindest fest vorgegebenen Blattwinkel betrieben. Hier liegt häufig eine Auslegung zu Grunde, bei der die Windenergieanlage mit optimaler Schnelllaufzahl betrieben wird.

Es kann vorkommen, dass die drei Blätter einer üblichen Windenergieanlage unterschiedliche Blattlasten erfahren. Es kann auch vorkommen, dass gleiche Windenergieanlagen, die zumindest gleich sein sollten, unterschiedliche Leistungskennlinien erreichen. Solche Leistungskennlinien kennzeichnen besonders den Teillastbetrieb. Sie geben einen Zusammenhang zwischen einer erfassten Drehzahl und einer einzustellenden Leistung wieder. Alternativ kann in diesem Sinne auch eine Drehmomentkennlinie relevant sein, die ein einzustellendes Drehmoment in Abhängigkeit von der Rotordrehzahl vorgibt.

Daher wurde erkannt, dass dann, wenn die drei Blätter unterschiedliche Blattlasten erfahren, eine Blattfehlstellung vorliegen könnte. Unter einer Blattfehlstellung wird der Zustand verstanden, dass die drei Rotorblätter aerodynamisch unterschiedlich angestellt sind. Ihre Rotorblätter sind also tatsächlich zueinander unterschiedlich. Gleichzeitig geht aber die Steuerung der Windenergieanlage davon aus, dass alle drei Blätter gleich angestellt, also gepitcht sind. Die Ursache dafür kann in einer falsch eingestellten Referenzposition, die auch als Nullposition bezeichnet werden kann, für den Blattwinkelcodierer liegen. Dies kann bspw. eine Ursache in einem fehlerhaften Vorgehen beim Aufbau der Windenergieanlage haben.

Es kann also eine Situation vorliegen, bei der die tatsächlichen Blattwinkel, zumindest von einem Rotorblatt, nicht dem Wert entsprechen, der der Steuerung zu Grunde liegt. Der Blattwinkelcodierer, also das Messsystem, gibt dann einen falschen Blattwinkel aus, der gegenüber dem tatsächlichen Blattwinkel um einen Offset, nämlich eine Blattfehlstellung, verändert ist.

Manchmal offenbaren sich Blattwinkelfehlstellungen, ähnlich wie Massenunwuchten, auch in Turm-, Leistungs- oder Drehzahlschwingungen bei der 1P-Frequenz, also der Rotorumlauffrequenz.

Um das Problem zu lösen, insbesondere die Blattfehlstellung möglichst auch dem Betrage nach zu identifizieren, sind Lösungen bekannt. Bekannt ist die Messung der Blattgeometrie mit einem Tachymeter von einem bodenfesten Standpunkt aus, und der Vergleich mit einer bekannten Blattgeometriereferenz. Dies ermöglicht eine Absolutblattwinkeleinstellung. Etwaige Massenunwuchten können damit allerdings nicht berücksichtigt werden. Eine solche Messung der Blattgeometrie ist allerdings mit einem hohen apparativen Aufwand verbunden.

Bekannt ist ebenso eine Wuchtzustandsvermessung von Windenergieanlagen im Betrieb mittels Beschleunigungssensoren oder Gyroskopen. Hierbei werden insbesondere Turmlängsschwingungen und Turmtorsionen mit der Rotorumlauffrequenz als Hinweis auf Blattwinkelfehlstellungen interpretiert, während Turmquerschwingungen auch ein Hinweis auf Massenunwuchten sein können.

Stand der Technik ist zum Beispiel offenbart in: CASELITZ P ET AL: "Rotor condition monitoring for improved operational safety of offshore wind energy converters", JOURNAL OF SOLAR ENERGY ENGINEERING, ASME INTERNATIONAL, US, Bd. 127, Nr. 2, 1. Mai 2005, Seiten 253-261, XP008084934, ISSN: 0199-6231, DOI: 10.1115/1.1850485.

Der vorliegenden Erfindung liegt somit die Aufgabe zu Grunde, zumindest eines der oben genannten Probleme zu adressieren. Insbesondere soll eine Lösung geschaffen werden, eine Blattfehlstellung möglichst effizient zu bestimmen. Zumindest soll zu bisher bekannten Lösungen eine Alternative vorgeschlagen werden.

Erfindungsgemäß wird ein Verfahren nach Anspruch 1 vorgeschlagen. Demnach liegt ein Verfahren zum Bestimmen wenigstens einer Blattfehlstellung eines Rotorblattes, die auch synonym als Blattwinkelfehlstellung bezeichnet werden kann, eines Rotors einer Windenergieanlage mit mehreren in ihrem Blattwinkel verstellbaren Rotorblättern zu Grunde. Üblicherweise haben Windenergieanlagen drei Rotorblätter und zumindest soll eine Blattfehlstellung eines dieser Rotorblätter bestimmt werden.

Die Blattfehlstellung beschreibt eine Blattwinkelabweichung des Blattwinkels des Rotorblattes von einem Referenzblattwinkel. Besonders beschreibt die Blattfehlstellung eine Abweichung zwischen einem angenommenen Blattwinkel und einem tatsächlich vorliegenden Blattwinkel.

Die Windenergieanlage weist eine Gondel mit dem Rotor und einer Azimutverstelleinrichtung auf. Eine Azimutverstelleinrichtung kann somit den Rotor in seiner Azimutausrichtung verändern. Insbesondere kann eine Windenergieanlage so aufgebaut sein, dass die Gondel drehbar auf einem Turm gelagert ist. Im Bereich der Oberseite des Turmes kann dabei ein umlaufender Zahnkranz vorgesehen sein. Zur Verstellung der Gondel können dafür mehrere Azimutmotoren jeweils mit einem Ritzel an dem Zahnkranz angreifen und dadurch die Position der Gondel verdrehen.

Weiterhin wird eine umlaufende Drehposition des Rotors berücksichtigt, die als Rotorposition bezeichnet wird. Bspw. kann ein Rotorblatt des Rotors als Bezugsposition verwendet werden, um es anschaulich zu erläutern, und die Position dieses Rotorblattes bei der Drehung des Rotors kann dann als Rotorposition verstanden werden.

Außerdem weist die Azimutverstelleinrichtung wenigstens einen aktivierbaren Azimutaktuator auf, um die Gondel in einer Azimutposition zu verstellen. Die beispielhaft genannten Azimutmotoren, die mittels Ritzel an den genannten Zahnkranz angreifen, können jeweils einen solchen Azimutaktuator bilden. Grundsätzlich kann ein einziger Azimutaktuator ausreichen, im Falle von Azimutmotoren als Azimutaktuatoren werden häufig mehrere verwendet, bspw. vier oder sechs Azimutmotoren an je einer von zwei Seiten der Gondel.

Das vorgeschlagene Verfahren umfasst wenigstens zwei Schritte, nämlich einen Erfassungsschritt und einen Bestimmungsschritt.

In dem Erfassungsschritt wird eine Azimutbewegung der Gondel erfasst, während der wenigstens eine Azimutaktuator inaktiv ist. Wenn der Azimutaktuator aktiv ist, kann eine Azimutbewegung der Gondel regelmäßig erfasst werden, was auch zur Steuerung der Azimutbewegung, nämlich zur Azimutverstellung, sinnvoll ist. Hier wird aber vorgeschlagen, auch bei inaktivem Azimutaktuator die Azimutbewegung der Gondel zu erfassen.

In dem Bestimmungsschritt wird die Blattfehlstellung in Abhängigkeit von der im Erfassungsschritt erfassten Azimutbewegung bestimmt. Die Azimutbewegung wird also trotz inaktivem Azimutaktuator erfasst und daraus die Blattfehlstellung bestimmt.

Hier wurde besonders erkannt, dass trotz inaktivem Azimutaktuator und damit im Ergebnis inaktiver Azimutverstelleinrichtung dennoch eine Azimutbewegung vorliegen kann. Diese kann besonders, aber nicht nur, durch den Wind ausgelöst sein.

Es liegen besonders die folgenden Gedanken der Erfindung zu Grunde.

Wenn die Blätter einer Windenergieanlage ein zeitlich nur langsam veränderliches Windfeld durchfahren, dann treten zyklische Schwankungen der auf die Anlagenstruktur wirkenden Kräfte auf, deren Frequenz der Blattdurchgangsfrequenz (3P beim Dreiblattrotor) oder einem Vielfachen davon entspricht. Anregungen bei der Rotorumlauffrequenz (1P) treten solange nicht auf, wie sich die drei Blätter identisch verhalten. Dies ist der beabsichtigte Zustand einer Windenergieanlage. An vielen weiteren Stellen wird davon ausgegangen, dass dieser Zustand erreicht und eingehalten wird, z.B. bei der Bauteildimensionierung während der Anlagenauslegung, und auch später im ertragsoptimalen Anlagenbetrieb.

Wenn es etwa bei einem Blatt zu einer Blattwinkel-Fehlstellung kommt, dann wird dieses Blatt mehr (oder weniger) Auftrieb erzeugen, und dabei auch mehr (oder weniger) Widerstand erzeugen. Gleichermaßen bewirkt eine Massenunwucht eine Erhöhung (oder Verringerung) der Zentrifugalkraft. Alle genannten Effekte können als zusätzliche Ersatzkraft modelliert werden, die an einem konstanten Punkt am Rotor angreift. Aus Sicht der Gondel rotiert der Angriffspunkt dieser Ersatzkraft mit der Rotordrehung, wird aber zyklisch nach jeweils einer vollständigen Rotorumdrehung (1P) wieder den gleichen Ort erreichen.

In der vorliegenden Erfindung wird das Azimutsystem beobachtet, um Rotorunwuchten zu erkennen. Dabei wird ausgenutzt, dass unwuchtbedingte Krafteinwirkungen auf das Azimutsystem einer Windenergieanlage stets wieder an der gleichen Rotorposition auftreten, sodass sich eine Korrelation zwischen der Rotorposition und der beobachteten Veränderung im Azimutsystem ergibt.

Insbesondere werden dabei kleine Azimutbewegungen beobachtet, welche aufgrund von Spiel und Flexibilität im Azimut-Antriebssystem auch bei geschlossenen Azimut-Bremsen auftreten und messbar sind.

Das Azimut-Antriebssystem ist auch ein Synonym für die Azimutverstelleinrichtung.

Beispielhaft wird eine Blattwinkelfehlstellung um 0,3° eines einzelnen Blattes betrachtet, welches zu stark in den Wind gedreht sei. Es wird dadurch mehr Auftrieb als beabsichtigt erzeugt. Wenn sich dieses Rotorblatt auf der rechten Seite der Gondel befindet, dann wird es eine Kraftwirkung auf das Azimutsystem erzeugen, welches eine leichte Rechtsdrehung (um z.B. 1/100°) bewirkt. Erst nach dieser leichten Rechtsdrehung sind die Azimutgetriebe ausreichend verspannt, sodass die Azimutbremsen eine Gegenkraft aufbringen können. Sobald sich der Rotor um 180° gedreht hat, befindet sich das Blatt auf der linken Seite der Gondel, und bewirkt eine Linksdrehung in vergleichbarer Amplitude.

Eine Massenunwucht, z.B. um 1200kg*m, würde eine vergleichbare Ersatzkraft erzeugen, deren Wirkrichtung jedoch innerhalb der Rotordrehebene liegt. Sie wirkt gleichermaßen auf das Azimutsystem, wobei jedoch der Hebelarm nicht mehr durch die Blattlänge variiert, sondern durch den Abstand von Azimut-Drehachse und Rotordrehebene.

Durch diese Betrachtung der Azimutbewegung können Unsymmetrien, die im Grunde in axialer Richtung wirken, auftreten. Besonders ungleichmäßiger Winddruck auf den Rotorblättern kann sich somit in einer Azimutbewegung widerspiegeln. Insoweit Azimutbewegungen mit einer 3P-Frequenz auftreten, also dreimal pro Rotorumdrehung, so sind sie dadurch zu erklären, dass ein entsprechender Rotor drei Rotorblätter aufweist. Solche Bewegungen können auch ohne Blattfehlstellung auftreten.

Liegt aber eine 1P-Frequenz vor, so ist diese auf eine Unsymmetrie des Rotors zurückzuführen. Durch eine Fehlstellung eines Rotorblattes erfährt dieses eine größere oder kleinere Kraft, die auch eine axiale Komponente aufweist, als die übrigen Rotorblätter.

Aus der Azimutbewegung wird also diese abweichende Kraft abgeleitet und daraus, bspw. durch Vergleichstabellen, eine Blattfehlstellung abgeleitet.

Im Übrigen können solche Unsymmetrien des Rotors bedingt durch Blattfehlstellungen auch als aerodynamische Unwuchten bezeichnet werden.

Gemäß einem Aspekt wird vorgeschlagen, dass in dem Erfassungsschritt eine Azimutfeststellbremse betätigt ist, um ein Verstellen der Azimutposition zu verhindern. Hier wurde besonders erkannt, dass eine beschriebene Azimutbewegung zum Bestimmen der Blattfehlstellung selbst bei betätigter Azimutfeststellbremse auftreten kann und erfasst werden kann. Damit ist das vorgeschlagene Verfahren besonders auch für solche Azimutverstelleinrichtungen anwendbar, die eine solche Feststellbremse verwenden. Grundsätzlich kann nämlich unterschieden werden zwischen zwei Typen bzw. Prinzipien der Azimutverstelleinrichtungen. In einem Fall wird eine Azimutposition durch eine entsprechende Regelung gehalten, auch wenn diese gerade nicht verstellt werden soll. In einem anderen Fall arbeitet eine Azimutverstelleinrichtung so, dass nach jedem Verstellvorgang die Azimutfeststellbremse betätigt wird, um die Gondel durch diese Bremse in ihrer Azimutposition zu halten. Für diese zweite Variante wird das vorgeschlagene Verfahren gemäß einem Aspekt angewendet.

Dabei wurde besonders erkannt, dass eine Azimutbewegung bei betätigter Azimutfeststellbremse allerdings sehr gering ist und ggf. besondere Maßnahmen erforderlich sind, eine entsprechend geringe Azimutbewegung auszuwerten, um daraus die Blattfehlstellung ableiten zu können. Das wird unten noch weiter erläutert.

Gemäß einem Aspekt wird vorgeschlagen, dass in einem Prüfschritt geprüft wird, ob eine, mehrere oder alle Erfassungsvoraussetzungen aus der folgenden Liste erfüllt sind.

Eine Erfassungsvoraussetzung, auf die in dem vorgeschalteten Prüfschritt geprüft werden kann, ist, ob der wenigstens eine Azimutaktuator inaktiv ist. Die Bedeutung wurde oben bereits erläutert. Hier wird vorgeschlagen, dass dies als Voraussetzung geprüft wird, bevor eine Azimutbewegung aufgenommen und zum Bestimmen der Blattfehlstellung ausgewertet wird.

Eine weitere mögliche Erfassungsvoraussetzung, die vorab geprüft werden kann, ist, ob die Azimutfeststellbremse betätigt ist. Die Wirkung und Bedeutung der Azimutfeststellbremse wurde oben beschrieben und gemäß diesem Aspekt wird vorgeschlagen, dass geprüft wird, ob die Azimutfeststellbremse aktiv ist. Dadurch kann sichergestellt werden, dass erfasste Azimutbewegungen nicht auf eine Verstellaktivität zurückgeführt werden können.

Eine weitere zu prüfende Erfassungsvoraussetzung ist, ob eine Pitcheinrichtung zum Verstellen der Blattwinkel inaktiv ist. Auch hier wurde erkannt, dass das Erfassen einer Azimutbewegung zum Bestimmen der Blattfehlstellung durchgeführt werden sollte, während die Rotorblätter in ihren Blattwinkeln nicht verstellt werden, da ansonsten zumindest eine Verfälschung der Ergebnisse auftreten kann.

Eine weitere zu prüfende Erfassungsvoraussetzung kann darin bestehen, dass geprüft wird, ob der Rotor wenigstens eine vorbestimmbare Mindesterfassungsdrehzahl aufweist. Eine solche Mindesterfassungsdrehzahl beträgt vorzugsweise wenigstens 25%, insbesondere wenigstens 40% einer Nenndrehzahl des Rotors. Hier wurde erkannt, dass bei einem sehr langsam drehenden Rotor eine Azimutbewegung, die zur Bestimmung einer Blattfehlstellung zu erfassen ist, zu langsam bzw. mit zu geringer Amplitude ausfallen kann. Hier besteht die Gefahr, dass ein Messrauschen, oder andere Störeinflüsse zu dominant sein können, um eine Azimutbewegung noch verlässlich auswerten zu können.

Vorzugsweise wird vorgeschlagen, dass alle vier Erfassungsvoraussetzungen geprüft werden, bevor der Erfassungsschritt durchgeführt wird. Hierzu wird vorgeschlagen, dass nur dann, wenn alle vier Erfassungsvoraussetzungen positiv geprüft wurden, die Erfassung und dann anschließend die Auswertung durchgeführt werden.

Der Prüfschritt kann dem Erfassungsschritt vorgeschaltet sein. Da es aber regelmäßig keinen Aufwand bereitet, Rotorposition und Azimutposition, und ggf. weitere Größen, zu erfassen, da dies für andere Auswertungen oder Regelungen in der Windenergieanlage ohnehin durchgeführt wird, kann auch zunächst die Erfassung der Azimutbewegung, also eines Azimutverlaufs durchgeführt werden. Waren die Erfassungsvoraussetzungen erfüllt, kann die anschließende Auswertung durchgeführt werden, anderenfalls können die erfassten Daten jedenfalls für die Bestimmung der Blattfehlstellung verworfen werden.

Gemäß einem Aspekt wird vorgeschlagen, dass zum Erfassen der Azimutbewegung ein von der Rotorposition abhängiger Azimutverlauf als Verlauf der Azimutposition erfasst wird, und aus Charakteristika des Azimutverlaufs die Blattfehlstellung bestimmt wird. Hier kann besonders erwartet werden, dass ein sinusförmiger Azimutverlauf vorliegt und aus seiner Amplitude und Phase, die beide jeweils ein Charakteristikum des Azimutverlaufs bilden, kann die Blattfehlstellung bestimmt werden.

Aus der Phase eines solchen Verlaufs kann besonders abgeleitet werden, welchem der Rotorblätter die Azimutbewegung zuzuordnen ist. Hier kommt auch in Betracht, dass sie mehreren Rotorblättern zugeordnet werden kann. Es kommt auch in Betracht, dass dann, wenn mehrere Rotorblätter eine Blattfehlstellung aufweisen, die insbesondere unterschiedlich zueinander sind, zwei Sinusverläufe in dem Azimutverlauf überlagert sind.

Aus der Amplitude des Verlaufs kann die Größe der Blattverstellung abgeleitet werden.

Die Zuordnung aus Amplitude und Phase eines solchen sinusförmigen Verlaufs des Azimutverlaufs einer konkreten oder mehrerer konkreter Blattfehlstellungen kann über entsprechend voraufgenommene Tabellen bzw. eine voraufgenommene Tabelle mit entsprechend vielen Einträgen erfolgen.

Solche Vergleichstabellen können bewusst in einer Windenergieanlage aufgenommen werden, in der keine Blattfehlstellung vorliegt. Zu Testzwecken kann ein Rotorblatt, oder mehrere Rotorblätter, bewusst in eine Blattfehlstellung gebracht werden, um dadurch eine solche Referenztabelle zu erstellen. Es können auch mehrere Blattfehlstellungen, insbesondere auch Blattfehlstellungen mit unterschiedlicher Amplitude getestet werden.

Gemäß der Erfindung wird vorgeschlagen, dass zum Erfassen der Azimutbewegung ein Azimutverlauf als Verlauf der Azimutposition über einen Rotorpositionsverlauf als Verlauf der Rotorposition aufgenommen wird, und zum Bestimmen der Blattfehlstellung der Azimutverlauf in Abhängigkeit von dem Rotorpositionsverlauf ausgewertet wird.

Im Grunde kann eine solche Auswertung des Azimutverlaufs in Abhängigkeit von dem Rotorpositionsverlauf auch schon dem vorigen Aspekt zu Grunde gelegen haben, bei dem aus Charakteristika des Azimutverlaufs die Blattfehlstellung bestimmt wird. Besonders können solche Charakteristika aus dem Azimutverlauf in Abhängigkeit von dem Rotorpositionsverlauf bestimmt werden. Insbesondere kann ein sinusförmiger Verlauf für den Azimutverlauf in Bezug auf den Rotorpositionsverlauf erwartet werden. Über eine Rotorumdrehung weist der Azimutverlauf dann eine Sinusschwingung bzw. Sinuswelle auf. Die Periodenlänge des erwarteten sinusförmigen Verlaufs entspricht somit einer Rotorumdrehung.

Hier und in den folgenden Aspekten liegt besonders die Erkenntnis zu Grunde, dass der aufgenommene Azimutverlauf, bei dem nämlich der Azimutaktuator, also insbesondere die Azimutverstelleinrichtung, inaktiv sind, nur eine sehr geringe Amplitude aufweist. Er kann sehr stark von Rauschen und/oder anderen Störungen überlagert sein. Hier liegt auch die Erkenntnis zu Grunde, dass eine verwendete Messeinrichtung, nämlich die Messeinrichtung, die auch beim Betätigen der Azimutverstelleinrichtung verwendet wird, nicht zum Aufnehmen so geringer Azimutbewegungen ausgelegt ist. Das kann dazu führen, dass diese geringen Azimutbewegungen nur sehr ungenau aufgelöst sind.

Dadurch, dass der Azimutverlauf in Abhängigkeit von dem Rotorpositionsverlauf ausgewertet wird, wird eine Korrelation zwischen diesen beiden Verläufen hergestellt. Dadurch können die einzelnen Werte des Azimutverlaufs konkreten Werten des Rotorpositionsverlaufs zugeordnet und damit besser weiterverarbeitet werden.

Gemäß einem Aspekt wird vorgeschlagen, dass aus dem Azimutverlauf eine 1P-Komponente berechnet wird, wobei die 1P-Komponente ein oszillierendes Signal mit einer Periode über eine Rotorumdrehung beschreibt, und basierend auf der 1P-Komponente die Blattfehlstellung bestimmt wird. Insbesondere wird die 1P-Komponente mit einer Amplitude und einer auf die Rotorposition bezogenen Phase berechnet.

Somit liegt hier auch der Azimutverlauf in Abhängigkeit von dem Rotorpositionsverlauf zu Grunde, sodass auch hier die Korrelation zwischen Azimutverlauf und Rotorpositionsverlauf gebildet und weiterverwendet wird. Es wird somit davon ausgegangen, dass der Azimutverlauf ein sinusförmiger Verlauf mit einer Periodenlänge ist, die einer Rotorumdrehung entspricht. Pro Rotorumdrehung führt die Azimutbewegung also einen sinusförmigen Verlauf aus.

Auch hier liegt somit der Gedanke zu Grunde, dass der Azimutverlauf nur eine geringe Signalamplitude bei vergleichsweise großem Rauschen bzw. sehr schlechter Auflösung aufweist. Durch die Annahme einer 1P-Komponente, also eines sinusförmigen Verlaufs mit einer Periode über eine Rotorumdrehung kann diese 1P-Koponente, also das sinusförmige Signal, nach Phase und Amplitude so bestimmt werden, dass dieser Sinusverlauf dem stark verrauschten Azimutverlauf möglichst gut entspricht. Anschaulich gesprochen wird das sinusförmige Signal somit so gelegt, dass Abweichungen zwischen dem sinusförmigen Signal und dem aufgenommenen Azimutverlauf möglichst gering sind.

Eine Möglichkeit zum Bestimmen der 1P-Komponente, also des sinusförmigen Signals nach Amplitude und Phase, ist über eine Fourier-Analyse. Vorzugsweise wird eine DFT (Diskrete Fourier-Transformation) verwendet.

Fourier-Transformationen und insbesondere ein DFT sind grundsätzlich bekannt. Hier geht es aber darum, nur die Grundwelle zu bestimmen. Außerdem liegt hier die Erkenntnis zu Grunde, dass für den Azimutverlauf ein sinusförmiges Signal erwartet wird.

Über diese Überlegungen ist es somit möglich, den erwartbaren Verlauf als sinusförmiges Signal vorzugeben, das insoweit kein Rauschen aufweist, wobei nur Amplitude und Phase des sinusförmigen Signals zu bestimmen sind. Daraus ergibt sich dann zwangsläufig ein nicht verrauschtes Signal, das wiederum sehr gut weiter ausgewertet werden kann, um die Blattfehlstellung zu bestimmen. Dazu können auch hier entsprechende Referenztabellen verwendet werden, wie oben schon zu einem anderen Aspekt beschrieben wurde.

Gemäß einem Aspekt wird vorgeschlagen, dass zur Auswertung des aufgenommenen Azimutverlaufs ein Integral über den Azimutverlauf aufgenommen wird, insbesondere über eine halbe Rotorumdrehung, und dass aus dem Integral eine Amplitude eines angenommenen sinusförmigen Azimutverlaufs bestimmt wird, insbesondere mit einer angenommenen Periodenlänge über eine Rotorumdrehung.

Hier wurde besonders erkannt, dass durch das Integrieren über eine halbe Periodenlänge eine Amplitude des integrierten Sinusverlaufs trotz stark verrauschten Signals gut bestimmt werden kann. Aus dem Integral der Halbwelle ist somit die Amplitude des integrierten Signals und damit die Amplitude des abgeleiteten sinusförmigen Signals bekannt bzw. über einen Umrechnungsfaktor berechenbar.

Durch das Integrieren über eine Halbwelle können die starken Schwankungen der Werte des Azimutverlaufs bzw. das starke Rauschen gut herausgemittelt werden. Hier wurde auch erkannt, dass durch das Integrieren, im digitalen Fall also Aufaddieren, eine sehr schlechte Auflösung bzw. sehr grobe Diskretisierung des Azimutverlaufs weniger Probleme bereitet. Besonders wurde erkannt, dass die Abweichungen der einzelnen Werte des Azimutverlaufs vom Idealverlauf über die Halbwelle im Mittel etwa 0 sind, sodass durch die Integralbildung ein guter Wert bestimmt werden kann.

Eine Möglichkeit zum Bestimmen der 1P-Komponente, also des sinusförmigen Signals nach Amplitude und Phase, kann somit über das beschriebene Integrieren sein. Die Phase kann aus einem Nulldurchgang des integrierten Signals abgeleitet werden, wobei eine Verschiebung um 90° wegen der Integralbildung zu berücksichtigen ist.

Es ist aber auch möglich, das Integrieren einem Bestimmen der 1 P-Komponente über eine Fourier-Analyse vorzuschalten. Auch dann kann vorzugsweise eine DFT (Diskrete Fourier-Transformation) verwendet werden.

Gemäß einem Aspekt wird vorgeschlagen, dass der Azimutverlauf über mehrere Rotorumdrehungen aufgenommen wird, vorzugsweise über wenigstens 10 Umdrehungen, insbesondere über wenigstens 1000 Umdrehungen. Dazu wird vorgeschlagen, dass aus dem Azimutverlauf ein gemittelter Azimutverlauf für eine Rotorumdrehung berechnet wird. Hierbei werden zu jeder Rotorposition jeweils alle zu dieser Rotorposition aufgenommenen Werte des Ausrichtungsverlaufs gemittelt oder anderweitig gefiltert.

Auch hier kann somit die Korrelation zwischen Azimutverlauf und Rotorpositionsverlauf ausgenutzt werden. Durch die sehr geringe Auflösung der Werte des Azimutverlaufs, bzw. durch überlagertes Rauschen und überlagerte Störungen, ist ein einzelner Wert des Azimutverlaufs nur sehr wenig aussagekräftig. Dadurch, dass das erwartete sinusförmige Signal, insbesondere die 1P-Komponente, genau mit einer Rotorumdrehung korreliert, kann im Grunde zu jeder Umdrehung derselbe Azimutverlauf aufgenommen werden. Durch die Wiederholung mit vielen Umdrehungen kann zu jeder Rotorposition, zu der ein Wert des Azimutverlaufs aufgenommen wird, ein Mittelwert gebildet werden. Wobei hier vorzugsweise wenigstens 10 Umdrehungen, insbesondere aber auch sehr viele Umdrehungen wie wenigstens 1000 Umdrehungen durchgeführt werden können. Bei bspw. 1000 Umdrehungen ergibt sich also ein Mittelwert über 1000 Werte, der somit eine sehr gute Mittelung darstellen kann.

Hier wurde erkannt, dass auch trotz des Problems der geringen Auflösung kein systematischer Fehler bei der Mittelung der Werte jeweils eine Rotorposition zu erwarten ist. Grundsätzlich kann zwar eine geringe Auflösung, also geringe Diskretisierung regelmäßig zu einem systematischen Fehler führen, der durch eine Mittelwertbildung regelmäßig nicht behoben werden kann, im vorliegenden Fall liegt ein solches Problem üblicherweise aber nicht vor. Das ist dadurch begründet, dass der Azimutverlauf sich dem Grunde nach zwar mit jeder Rotorumdrehung wiederholt, seine Amplitude gleichwohl etwas schwankt, was sich daraus ergibt, dass der Wind üblicherweise nie exakt konstant ist. Diese zumindest geringen Schwankungen führen dazu, dass trotz geringer Auflösung für die Werte jeder Rotorposition eine statistische Gleichverteilung erwartet werden darf.

Statt der Mittelung, die hier bevorzugt wird, kann auch eine andere Filterung vorgenommen werden, indem bspw. die Werte des Azimutverlaufs jeweils für eine Rotorposition über ein Verzögerungsglied erster Ordnung (PT1-Glied) geführt werden, um sie dadurch zu glätten, also zu filtern. Die Verwendung eines Verzögerungsgliedes erster Ordnung hat den Vorteil, dass aktuellere Werte einen größeren Einfluss als ältere Werte haben. Das Ergebnis ist also aktueller und damit besser an die vorherrschende Windgeschwindigkeit angepasst, sollte sich diese während der Messerfassung etwas geändert haben.

Gemäß einem Aspekt wird vorgeschlagen, dass aus Azimutwerten als rotorpositionsabhängige Werte der erfassten Azimutbewegung durch Vergleich mit in Voruntersuchungen aufgenommenen Azimutwerten die wenigstens eine Blattfehlstellung bestimmt wird. Insbesondere wird vorgeschlagen, dass zu Amplitude und Phase einer aus der erfassten Azimutbewegung bzw. aus dem Azimutverlauf abgeleiteten 1P-Komponente, in einer Tabelle jeweils Blattfehlstellungswerte der Rotorblätter hinterlegt sind.

Voruntersuchungen können, wie oben schon beschrieben wurde, durch tatsächliche Probeläufe der Windenergieanlage durchgeführt werden, indem gezielt Blattfehlstellungen eingestellt werden, um davon abhängig eine resultierende Azimutbewegung zu beobachten. Es kommt aber auch in Betracht, dass die nötigen Zusammenhänge in einer Simulation aufgenommen wurden.

Besonders wird vorgeschlagen, dass eine 1P-Komponente verwendet wird, wie oben schon beschrieben wurde. Eine solche 1P-Komponente, die somit einen sinusförmigen Verlauf mit einer Periodenlänge entsprechend einer Rotorumdrehung bildet, kann durch ihre Amplitude und ihre Phase gekennzeichnet sein. Die Phase ist somit einer Rotorposition zugeordnet. Die Phase kann dabei so verstanden werden, dass ein Nulldurchgang des sinusförmigen Verlaufs der 1P-Komponente einer Rotorposition zugeordnet wird. Es kommen auch andere Varianten in Betracht, z.B., dass als Phase oder als Äquivalent zur Phase die Rotorposition aufgenommen wird, bei der die maximale Amplitude auftritt.

In einer zweidimensionalen Tabelle können dann Amplitude einerseits und Phase andererseits, also Rotorpositionen, hinterlegt sein. Die Phase, also Rotorposition, lässt Rückschlüsse darauf zu, welches Rotorblatt die Blattfehlstellung aufweist. Bspw. kann der Azimutverlauf ein Maximum bei einer Rotorposition aufweisen, bei der bspw. ein erstes von drei Rotorblättern quer absteht, z.B. in einer 9-Uhr-Stellung. In diesem Fall kann die 9-Uhr-Stellung als Rotorposition bzw. Phase in der Tabelle eingetragen sein und daraus lässt sich ableiten, dass die Blattfehlstellung dem beispielhaft genannten ersten Rotorblatt zuzuordnen ist. Aus der Amplitude kann abgeleitet werden, wie groß die Blattfehlstellung ist.

Auch für die Amplitude ist es ratsam, eine solche Tabelle zu verwenden, da erkannt wurde, dass nichtlineare Zusammenhänge zwischen Amplitude des Azimutverlaufs und Blattfehlstellung vorliegen können. Das liegt besonders daran, dass die Flexibilität der Azimutverstelleinrichtung nicht nur auf eine Elastizität, sondern auch auf wenigstens eine Getriebelose zurückgeführt werden kann. Entsprechend sind deswegen schon die Zusammenhänge zwischen Amplitude des Azimutverlaufs und der Blattfehlstellung als nichtlinear zu erwarten. Andere Nichtlinearitäten können hinzukommen. Die Verwendung einer Tabelle ist aber auch bei vernachlässigbaren Zusammenhängen sinnvoll, besonders um aus in der Tabelle abgespeicherten Werten auf andere zu interpolieren oder zu extrapolieren.

Gemäß einem anderen Beispiel, um obiges Beispiel etwas abzuwandeln, wird angenommen, dass als Phase bzw. Rotorposition eine 11-Uhr-Stellung erkannt wurde. Ist die maximale Auslenkung bei der 11-Uhr-Stellung, während ein erstes Rotorblatt in 9-Uhr-Stellung ist, befindet sich ein zweites Rotorblatt in 1-Uhr-Stellung. Die nun erkannte 11-Uhr-Stellung als Maximum liegt somit unmittelbar mittig zwischen diesem ersten und zweiten Rotorblatt. Das kann bedeuten, dass die Azimutverstellung im dritten Rotorblatt vorliegt, aber mit negativem Vorzeichen, oder dass das erste und zweite Rotorblatt beide eine Blattfehlstellung aufweisen. Das Ergebnis kann auch verwendet werden, den zu Grunde liegenden Fehler durch Servicepersonal genauer zu untersuchen.

Gemäß einem Aspekt wird vorgeschlagen, dass die Azimutverstelleinrichtung zum Verstellen der Gondel ein Getriebe mit einer Getriebeelastizität aufweist, wobei das Getriebe zwischen einem Ritzel einerseits, das an einem Zahnkranz angreift, und dem Azimutaktuator und/oder einer bzw. der Azimutbremse andererseits angeordnet ist, sodass die Getriebeelastizität bei inaktivem Azimutaktuator bzw. betätigter Azimutbremse die erfasste Azimutbewegung zulässt. Außerdem oder alternativ kann eine Getriebelose zwischen Ritzel und Zahnkranz vorgesehen sein.

Hier wird somit besonders ausgenutzt, dass zwischen Azimutaktuator, insbesondere also einem Azimutmotor, und dem Ritzel ein Getriebe ist, das nicht unendlich steif ist. Ein solches Getriebe übersetzt insbesondere von einer hohen Drehzahl des Azimutmotors zu einer sehr langsamen Drehzahl des Ritzels. Diese Getriebeelastizität zwischen Antriebsmotor und Ritzel lässt trotz inaktivem Azimutaktuator, also inaktivem Azimutmotor, eine geringe Bewegung zu. Diese hierdurch zugelassene Bewegung kann als Azimutbewegung erfasst werden.

Das Getriebe kann auch eine Getriebelose beinhalten.

Die Azimutbremse kann insbesondere am Azimutaktuator, also Azimutmotor angebracht sein. Insbesondere kann sie unmittelbar den Antriebsmotor bremsen, oder ein Getriebeelement, auf das auch der Antriebsmotor zugreift. Dadurch ist das Getriebe, das auch als Azimutgetriebe bezeichnet werden kann, auch zwischen der Azimutbremse und dem Ritzel angeordnet, sodass auch bei festgestellter Azimutbremse die Getriebeelastizität die Azimutbewegung zulässt.

Außerdem oder alternativ kann eine Getriebelose zwischen Ritzel und Zahnkranz vorgesehen sein. Diese kann auch als Teil des Getriebes verstanden werden. Wird sie separat verstanden, so kann sie zusätzlich zum Getriebe eine Azimutbewegung zulassen.

Es wurde also erkannt, dass besonders eine solche Getriebeelastizität und/oder -lose in dem Bereich eine Azimutbewegung trotz inaktiver Azimutverstellung zulässt und darüber eine Auswertung der Azimutbewegung in dieser Situation ermöglicht, um dadurch den Blattverstellwinkel zu bestimmen.

Gemäß einem Aspekt wird vorgeschlagen, dass wenigstens der Erfassungsschritt und der Bestimmungsschritt jeweils nach einer vorbestimmten Wartezeit und/oder einem anderen vorgebbaren Anlass wiederholt werden, um eine mögliche Veränderung der bestimmten Blattfehlstellung zu überprüfen, wobei insbesondere die vorbestimmte Wartezeit wenigstens einen Monat, insbesondere wenigstens ein halbes Jahr beträgt.

Hier wurde besonders erkannt, dass das vorgeschlagene Verfahren gemäß all den vorgeschlagenen Aspekten nicht nur geeignet ist, eine anfängliche Blattfehlstellung zu erkennen. Eine solche anfängliche Blattfehlstellung kann besonders im Aufbau der Windenergieanlage auftreten und durch das Verfahren korrigiert werden. Es wurde vielmehr aber erkannt, dass das vorgeschlagene Verfahren keinerlei zusätzlichen operativen Aufbau benötigt und daher nach einer entsprechenden Wartezeit, also insbesondere nach einem Monat oder nach einem halben Jahr, oder nach einem Jahr, testweise erneut durchgeführt werden kann.

Besonders wurde erkannt, dass das Verfahren im laufenden Betrieb durchgeführt werden kann. Zwar wird vorzugsweise überprüft, ob bestimmte Erfassungsvoraussetzungen gegeben sind, das bedeutet aber nicht, dass solche Voraussetzungen gezielt eingestellt werden. Vielmehr kann abgewartet werden, bis sich solche Erfassungsvoraussetzungen im laufenden Betrieb von alleine einstellen. Das Verfahren zum Bestimmen der Blattfehlstellung kann dann im Grund im Hintergrund laufen und etwaige zwischenzeitlich aufgetretenen Fehler können erkannt werden.

Bspw. kann eine Blattfehlstellung nach einer Wartung auftreten, um nur ein Beispiel zu nennen. Entsprechend kann die Wartung ein anderer vorgegebener Anlass sein. Auch kann bspw. ein Blatttausch ein anderer vorgegebener Anlass sein, nach dem das Verfahren zum Bestimmen einer Blattfehlstellung, insbesondere der Erfassungsschritt und der Bestimmungsschritt wiederholt werden.

Erfindungsgemäß wird auch eine Windenergieanlage gemäß Anspruch 11 vorgeschlagen, die vorbereitet ist zum Bestimmen wenigstens einer Blattfehlstellung eines Rotorblattes eines Rotors der Windenergieanlage, wobei der Rotor mehrere in ihrem Blattwinkel verstellbare Rotorblätter aufweist, wobei
- die Blattfehlstellung eine Blattwinkelabweichung des Blattwinkels des Rotorblattes von einem Referenzblattwinkel beschreibt,
- die Windenergieanlage eine Gondel mit dem Rotor und einer Azimutverstelleinrichtung aufweist, wobei
- eine umlaufende Drehposition des Rotors als Rotorposition bezeichnet wird, und
- die Azimutverstelleinrichtung wenigstens einen aktivierbaren Azimutaktuator aufweist, um die Gondel in einer Azimutposition zu verstellen, wobei
- die Windenergieanlage
   - eine Erfassungseinrichtung aufweist, um in einem Erfassungsschritt eine Azimutbewegung der Gondel zu erfassen, während der wenigstens eine Azimutaktuator inaktiv ist, und
   - eine Recheneinheit aufweist, um in einem Bestimmungsschritt die Blattfehlstellung in Abhängigkeit von der im Erfassungsschritt erfassten Azimutbewegung zu bestimmen.

Somit weist die Windenergieanlage eine Erfassungseinrichtung auf, die insbesondere einen Sensor zum Messen der Azimutbewegung ist oder beinhaltet. Die Recheneinheit kann insbesondere ein Prozessrechner sein, der in der Windenergieanlage angeordnet ist.

Gemäß einem Aspekt weist die Windenergieanlage eine Steuereinheit auf und ist dazu vorbereitet, ein Verfahren gemäß einem der vorstehend erläuterten Aspekte des Verfahrens zum Bestimmen einer Blattfehlstellung auszuführen. Dazu kann besonders das Verfahren in der Steuereinheit implementiert sein. Die Erfassungseinrichtung kann Teil der Steuereinheit sein und/oder beides kann Teil eines Prozessrechners sein, auf dem auch das Verfahren implementiert sein kann. Das Verfahren kann besonders als Computerprogramm auf dem Prozessrechner implementiert sein.

Die Erfindung wird nachfolgend exemplarisch anhand von Ausführungsbeispielen unter Bezugnahme auf die begleitenden Figuren näher erläutert.
- Figur 1: zeigt eine Windenergieanlage in einer schematischen Darstellung.
- Figur 2A: zeigt einen zeitlichen Verlauf einer Azimutposition über die Zeit.
- Figur 2B: zeigt den Verlauf der Azimutposition der Figur 2A in einer höheren Auflösung.
- Figur 2C: zeigt einen Verlauf einer Rotorposition über dieselbe Zeit der Figuren 2A und 2B.
- Figur 3A: zeigt einen Verlauf der Azimutposition über eine Rotorumdrehung.
- Figur 3B: zeigt einen gefilterten Verlauf der Azimutposition über eine Umdrehung basierend auf einer Messaufnahme über viele Umdrehungen.
- Figur 4: zeigt ein vereinfachtes Ablaufdiagramm eines vorgeschlagenen Verfahrens zum Bestimmen einer Blattfehlstellung.

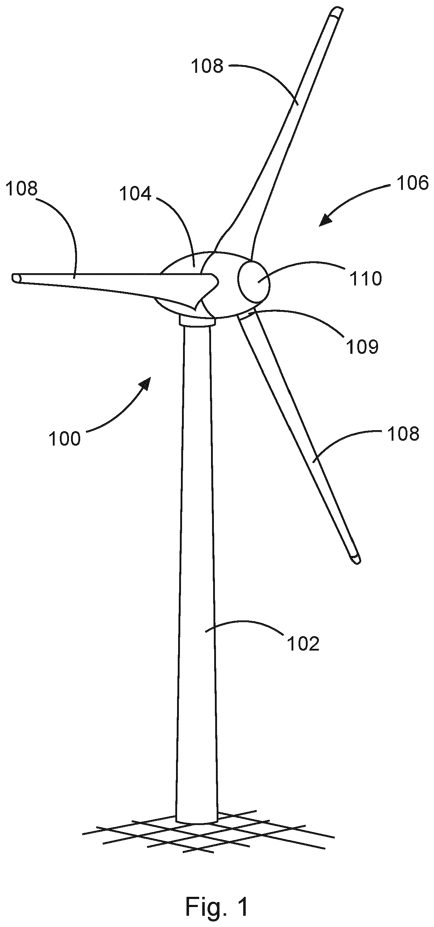

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

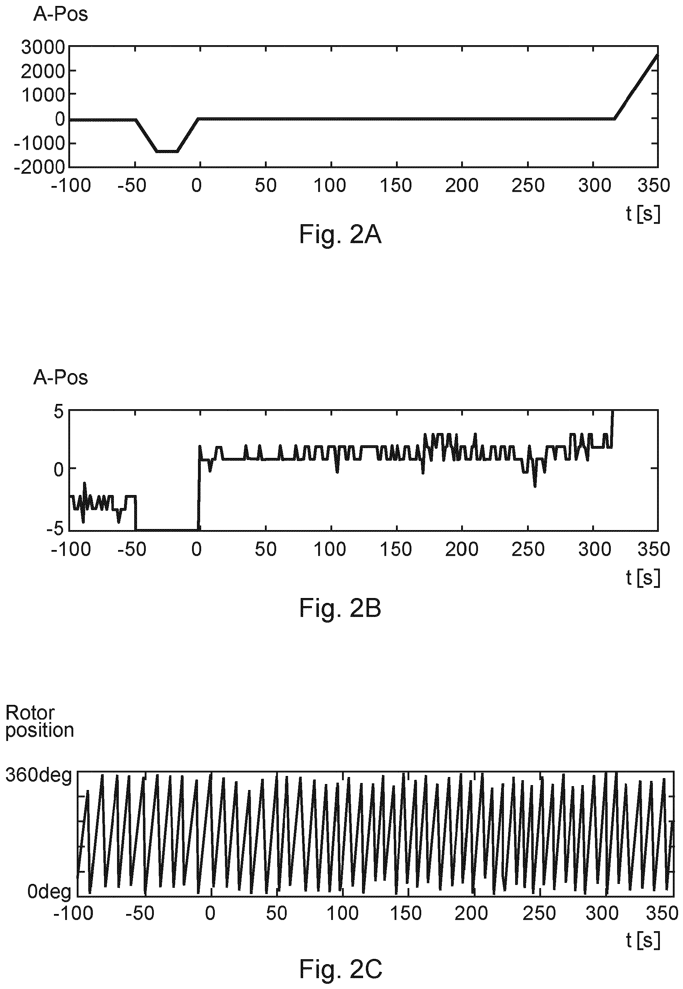

Die Figuren 2A bis 3B veranschaulichen und erläutern ein Beispiel, bei dem ein Blattwinkelfehler, also eine Blattfehlstellung an einem Rotorblatt von 0,3° aufgetreten ist. Zunächst wird ein gemessener Azimutwinkel, also die Azimutposition, in einem mehrminütigen Messzeitraum bei laufender Windenergieanlage, die vereinfachend auch als Anlage bezeichnet werden kann, betrachtet. Das zeigt die Figur 2A.

In der Figur 2A ist somit der Verlauf der Azimutposition, also der Verlauf des Azimutwinkels über einen mehrminütigen Messzeitraum, hier nämlich 450 s, dargestellt. An der Abszisse ist somit die Zeit abgetragen und an der Ordinate der Azimutwinkel, wobei als Einheit die Auflösung des Encodersignals zu Grunde gelegt wird, nämlich in dem Sinne, dass das Encodersignal auf den Wert 1 auflösen kann, sodass das Encodersignal also nur ganze Zahlen ausgeben kann.

Mit dieser kleinsten Einheit 1 des Encodersignals entspricht der Wert 1000 einem Azimutwinkel mit wenigen Grad.

Der eingestellte Azimutwinkel zu Beginn des Messzeitraums kann als Referenzwert zu Grunde gelegt und als Wert 0 festgelegt werden. Davon ausgehend ist zu erkennen, dass bei t = -50 bis t = 0 und ab t = 320 s Windnachführungen stattfinden.

Im Bereich von t = 0 s bis t = 320 s finden somit keine Windnachführungen statt und es scheint auch überhaupt keine Bewegung im Azimutsystem aufzutreten.

Der Bereich von t = 0 bis t = 320 s ist in der Figur 2B sehr stark aufgelöst, also in Richtung der Ordinate sehr stark vergrößert. In Figur 2A reichen die Werte an der Ordinate von -2000 bis +3000. In Figur 2B reichen die Werte von -5 bis +5. Im Bereich von t = 0 bis t = 320 s findet keine Windnachführung, also keine Azimutverstellung statt und damit kann grundsätzlich eine Auswertung des Verlaufs der Azimutposition in diesem Bereich durchgeführt werden, um eine Blattfehlstellung zu erkennen.

Dazu wird vorgeschlagen, zusätzlich Kriterien zu prüfen, nämlich zusätzlich dazu, dass keine Azimutverstellung erfolgt, der Azimutaktuator also inaktiv ist, zu prüfen, ob die Feststellbremse betätigt ist, eine Pitcheinrichtung zum Verstellen der Blattwinkel inaktiv ist und der Rotor wenigstens eine vorbestimmte Mindesterfassungsdrehzahl aufweist. In dem gezeigten Beispiel wurde erkannt, dass diese Kriterien erfüllt sind.

Damit ist ab dem Zeitpunkt t = 0 bis zum Einsetzen der nächsten Windnachführung für mehrere Minuten eine Auswertung, nämlich eine Erfassung der Unwucht möglich. Hier lag für diesen Zeitraum dauerhaft eine hohe Rotordrehzahl vor und das Pitchsystem, also eine Verstelleinrichtung zum Verstellen des Blattwinkels, blieb ungenutzt.

In der Darstellung der Figur 2B mit der hohen Auflösung ist auch zu erkennen, dass die Form des Signals, also die Form des aufgenommenen Verlaufs der Azimutposition, durch die Auflösung auf den Wert 1 bestimmt ist. Die meisten zu erkennenden Veränderungen in dem Bereich zwischen t = 0 und t = 320 s sind Sprünge um den Wert der kleinsten Auflösung.

In Figur 2C ist eine Rotorposition, also ihr zeitlicher Verlauf, über denselben Zeitraum dargestellt, der auch in den Figuren 2A und 2B betrachtet wird. Es wurde erkannt, dass im Vergleich der Diagramme gemäß Figur 2B und Figur 2C die scheinbar zufälligen Änderungen in der Bewegung des Azimutsystems in einer ähnlichen Frequenz auftreten wie die in Figur 2C gezeigten Rotorumdrehungen. Daher wird vorgeschlagen, diese Werte zur besseren Auswertung noch weiter aufzubereiten.

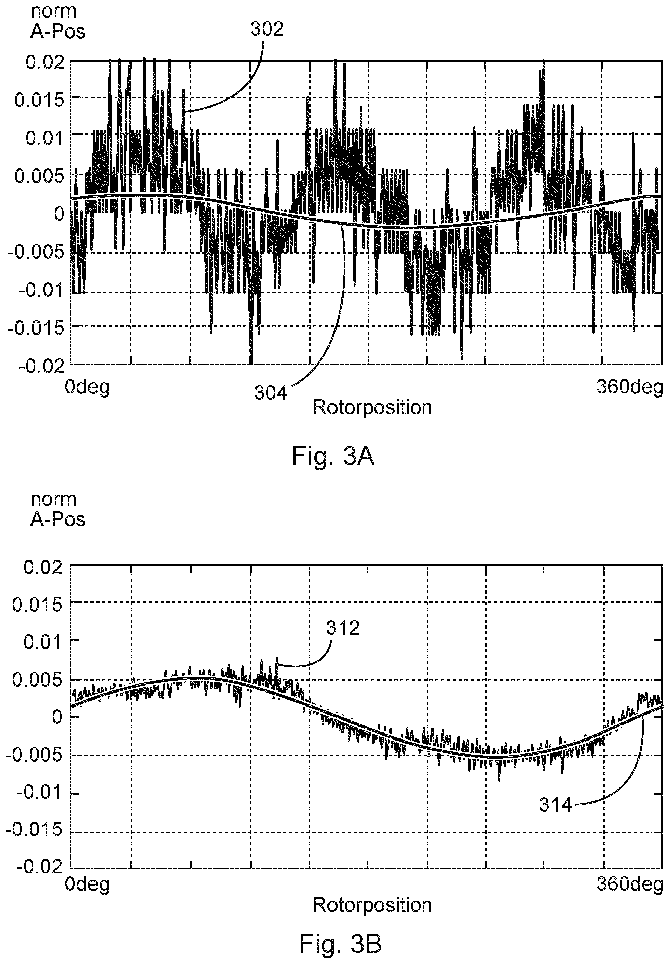

Es wurde folgendes erkannt:
Wird über einen mehrstündigen Zeitraum aufgezeichnet, an welchen Rotorpositionen es zu Veränderungen des gesamten Azimutwinkels kommt, ergibt sich daraus, nach Normierung mit der Anzahl an Rotorumdrehungen, das in Figur 3A gezeigte Diagramm.

In Figur 3A ist ein stark verrauschtes Messsignal 302 gezeigt, das eine dreifache Frequenz der Rotordrehzahl aufweist, bzw. in dem eine starke 3P-Komponente sichtbar ist. Das bedeutet, dass an drei ausgezeichneten Rotorpositionen die Gondel tendenziell nach rechts gedreht wird, während sie an drei dazwischenliegenden Rotorpositionen tendenziell nach links gedreht wird. Eine solche 3P-Komponente wird durch eine horizontale Windscherung erzeugt und ist auch ohne Rotorunwucht zu erwarten.

Aus den gezeigten Daten kann aber auch eine 1P-Signalkomponente 304 berechnet werden. Die 1P-Signalkomponente 304 ist somit ein Signal mit derselben Frequenz wie die Rotordrehzahl. Sie weist also einen zyklischen, insbesondere sinusförmigen Verlauf mit einer Periodenlänge auf, die einer Umdrehung des Rotors entspricht.

Diese 1P-Signalkomponente 304 ist in Figur 3A bereits eingezeichnet, ihre Berechnung wird aber nachfolgend noch erläutert. Jedenfalls wurde erkannt, dass aus den gezeigten Daten diese 1P-Signalkomponente 304 berechnet werden kann, wie sie in Figur 3A dargestellt ist. Es ist also erkennbar, dass zumindest in geringem Maße auch ein 1P-Signalanteil, nämlich die 1P-Signalkomponente 304, enthalten ist. Dieser 1P-Signalanteil deutet auf eine Rotorunwucht hin, nämlich insbesondere auf eine aerodynamische Rotorunwucht.

Es wird vorgeschlagen, die Aufzeichnung solcher Azimutwerte, während keine Azimutverstellung durchgeführt wird, über einen längeren Zeitraum fortzusetzen. Es wurde erkannt, dass sich dadurch manche Einflüsse aus dem Windfeld herausmitteln. Dies betrifft insbesondere eine horizontale Windscherung. Eine solche Windscherung führt zu einer ungleichen Belastung des Rotors, sodass - anschaulich ausgedrückt - an einer Position im Rotorfeld eine höhere Belastung ist, die jeweils auf das dort passierende Rotorblatt wirkt. Bei drei Rotorblättern ergibt sich daher eine 3P-Komponente, die in dem Messsignal 302 zu erkennen ist. Eine solche Windscherung, oder anderer Effekt durch nicht vollständig homogenen Wind, verändert sich aber, sodass sich auch die lokale Belastung verschiebt, und sich damit auch die erkennbare 3P-Signalkomponente verändert. Es wurde erkannt, dass sich damit bei einer Mittelung über einen längeren Zeitraum solche Effekte herausmitteln.

Nach einer solchen Mittelung bleibt dann im Grunde auch in den normierten Rohdaten, die in den Figuren 3A und 3B dargestellt sind, ein Signalverlauf über, der eine deutliche 1P-Komponente aufweist. Dieser ist als gemittelter Signalverlauf 312 in Figur 3B eingezeichnet. Dieser gemittelte Signalverlauf 312, also der Verlauf der Azimutposition, wird derart gemittelt, dass jeweils die Werte, die zu einer gleichen Rotorposition aufgenommen wurden, gemittelt werden.

Das Ergebnis ist somit dieser gemittelte Signalverlauf 312, der als verrauschter Signalverlauf erscheint, wobei nicht alle Schwankungen auf ein Rauschen zurückzuführen sein müssen. Es wird vorgeschlagen, hieraus eine 1P-Komponente zu berechnen, die in Figur 2B als 1P-Signalkompontente 314 eingezeichnet ist. Sie entspricht der 1P-Signalkomponente 304 der Figur 3A. Eine Berechnung erfolgt so, dass die 1P-Komponente mit der Periodenlänge entsprechend einer Rotorumdrehung vorgegeben wird, wobei Amplitude und Phase so berechnet werden, dass die 1P-Signalkomponente 314 den gemittelten Signalverlauf 312 möglichst gut abbildet.

Die Berechnung kann mittels einer DFT erfolgen. Es kommt auch in Betracht, Amplitude und Phase nach einem Gauß-Verfahren zu optimieren, um Abweichungen zwischen der 1P-Signalkomponente 314 und dem gemittelten Signalverlauf 312 zu minimieren.

Aus der so bestimmten 1P-Komponente kann dann die Blattfehlstellung abgeleitet werden, wobei dies wie folgt erfolgen kann. Eine Rotorunwucht wird dafür über Vergleiche der gefundenen, also berechneten Amplitude der 1P-Komponente mit bekannten Referenzen bestimmt. Eine solche Referenz kann dadurch gebildet werden, dass an einem Prototyp einer Windenergieanlage eine gerade noch tolerierbare Unwucht eingestellt wird, und die sich dabei ergebende 1P-Komponente, die auch als 1P-Kurve bezeichnet werden kann, bestimmt wird. Es können auch weitere Versuche mit einer noch geringeren als der tolerierbaren Unwucht durchgeführt werden. Unter der genannten Unwucht ist insbesondere eine aerodynamische Unwucht zu verstehen, die durch Vornahme einer Blattfehlstellung eingestellt wird.

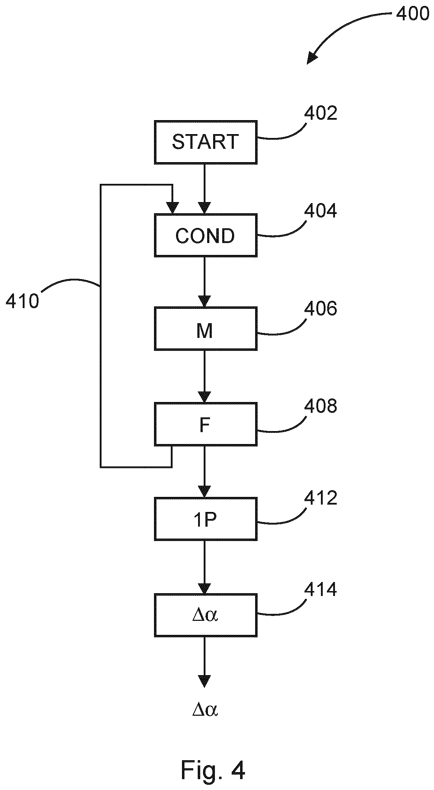

Figur 4 erläutert das vorgeschlagene Verfahren anhand eines Ablaufdiagramms 400. In einem Startschritt 402 wird das Verfahren gestartet. Der Startschritt 402 kann durch eine Zeit ausgelöst werden, bspw. alle halbe Jahre, oder durch ein Ereignis, wie die Fertigstellung der Windenergieanlage nach ihrem Aufbau. Auch andere Ereignisse wie ein Blatttausch können den Startschritt 402 auslösen.

In einem Prüfschritt 404 werden Bedingungen geprüft, die zu Grunde liegen sollen, wenn eine Erfassung der Azimutbewegung, insbesondere eine Erfassung eines Azimutpositionsverlaufs mit anschließender Auswertung zur Bestimmung der Blattfehlstellung durchgeführt werden soll. In dem Prüfschritt 404 kann besonders geprüft werden, ob ein Azimutaktuator inaktiv ist, eine Azimutfeststellbremse betätigt ist, eine Pitcheinrichtung inaktiv ist und der Rotor wenigstens eine vorbestimmbare Mindesterfassungsdrehzahl aufweist.

Sind all diese Bedingungen erfüllt, setzt sich das Verfahren nach dem Prüfschritt 404 in dem Erfassungsschritt 406 fort. In dem Erfassungsschritt wird ein Azimutpositionsverlauf aufgenommen und gleichzeitig wird ein Rotorpositionsverlauf aufgenommen. Beide Verläufe werden korreliert, also eine erfasste Azimutposition wird der Rotorposition zugeordnet, zu der sie erfasst wurde. Die entsprechenden erfassten Werte sowohl der Azimutposition als auch der Rotorposition können durch Sensoren erfasst und damit gemessen werden.

Alternativ können der Prüfschritt 404 und der Erfassungsschritt 406 auch vertauscht sein, indem die Erfassung, also Messung, ständig durchgeführt wird und anschließend die Erfassungsvoraussetzungen gemäß dem Prüfschritt 404 geprüft werden. Sind sie nicht erfüllt, dann würde die nachfolgende Auswertung nicht mehr durchgeführt werden, jedenfalls nicht mit den Daten, die bei nicht erfüllten Erfassungsvoraussetzungen aufgenommen wurden.

Gemäß der veranschaulichten Variante der Figur 4 setzt das Verfahren nach dem Erfassungsschritt 406 mit dem Filterschritt 408 fort. In dem Filterschritt 408 werden alle aufgenommenen Azimutpositionen jeweils einer Rotorposition gefiltert, insbesondere gemittelt. Es werden also nur die Werte gefiltert, die unter erfüllten Erfassungsvoraussetzungen aufgenommen wurden.

Das Ergebnis des Filterschritts 408 kann somit der in Figur 3B dargestellte gemittelte Signalverlauf 312 sein. Das Ergebnis wird im Grunde umso besser, je mehr Werte pro Rotorposition aufgenommen wurden, also je mehr Werte in die Mittelung bzw. Filterung einfließen. Dazu wird die Erfassung und Filterung, jeweils unter Prüfung der Erfassungsvoraussetzungen wiederholt. Das wird durch die Wiederholungsschleife 410 angedeutet. Der Wiederholungsschleife kann eine vorbestimmte Anzahl Wiederholungen zu Grunde liegen oder eine Anzahl durchzuführender Umdrehungen des Rotors. Eine solche vorschaltbare Abfrage ist der Einfachheit halber in dem Ablaufdiagramm 400 in Figur 4 nicht eingezeichnet.

Die Wiederholungsschleife 410 ist zudem im Wesentlichen symbolisch zu verstehen. Es kommt auch in Betracht, dass der Erfassungsschritt 406 kontinuierlich durchläuft und für eine Rotordrehung nach der anderen Werte aufnimmt. Parallel prüft der Prüfschritt 404, ob die Erfassungsvoraussetzungen erfüllt sind, und das wird für eine vorbestimmbare Anzahl von Rotorumdrehungen durchgeführt, bspw. über 1000 oder 2000 Umdrehungen.

Sollte im Prüfschritt 404, ob er nun dem Erfassungsschritt 406 vorgeschaltet oder nachgeschaltet ist, erkannt werden, dass eine Erfassungsvoraussetzung nicht erfüllt ist, insbesondere, weil eine Azimutverstellung durchgeführt wurde, so braucht das Verfahren nicht abgebrochen zu werden. In diesem Fall kann es ausreichen, wenn die erfassten Werte unberücksichtigt bleiben, die erfasst wurden, während die Erfassungsvoraussetzungen nicht erfüllt waren. Ergeben sich aber zu starke Abweichungen des Betriebspunkts der Windenergieanlage, kommt auch in Betracht, das Verfahren abzubrechen.

Jedenfalls kann das Verfahren nach ausreichender Wiederholung, wenn im Filterschritt 408 ein ausreichend gut gemittelter bzw. gefilterter Signalverlauf der Azimutposition ermittelt wurde, diesen gemittelten Signalverlauf an den 1P-Berechnungsschritt 412 übergeben.

In dem 1P-Berechnungsschritt 412 wird aus dem gemittelten Signalverlauf, der dem gemittelten Signalverlauf 312 der Figur 3B entsprechen kann, eine 1P-Komponente berechnet, die der 1P-Signalkomponente 314 der Figur 3B entsprechen kann.

Diese 1 P-Signalkomponente kann dann im Auswerteschritt 414 ausgewertet werden. Dazu kann der Auswerteschritt 414 die 1P-Signalkomponente erhalten, die im 1P-Berechnungsschritt 412 berechnet wurde. Dazu ist ausreichend, dass Amplitude und Phase der 1P-Komponente vom 1P-Berechnungsschritt 412 an den Auswerteschritt 414 übergeben werden.

In dem Auswerteschritt 414 kann basierend auf der 1P-Komponente aus vorbestimmten Tabellen eine Blattfehlstellung Δα bestimmt werden.

Erfindungsgemäß, zumindest nach einigen Aspekten, ist besonders das Folgende erkannt worden bzw. wird vorgeschlagen.

Das erfindungsgemäße Verfahren kann die nachfolgenden Schritte aufweisen:
- Prüfung, ob eine aktuell vorliegende Anlagenbetriebssituation für eine Erkennung einer Rotorunwucht geeignet ist. Als geeignet angenommen wird dabei ein Einspeisebetrieb, in dem die Anlage im Teillastbereich betrieben wird, ohne dass es zu Windnachführungen, oder anderen aktiven Bewegungen des Azimutsystems, oder es zu aktivem Verfahren des Blattverstellsystems kommt. Weiterhin wird eine Mindestrotordrehzahl vorausgesetzt, z.B. 50% der Nenndrehzahl des Anlagentyps, sodass aerodynamische Kräfte und Zentrifugalkräfte als stark gegenüber Reibkräften angenommen werden können.
- Prüfung einer Messgröße des Azimutsystems auf Veränderung.
- Aufzeichnung der Rotorposition, an der die beobachtete Veränderung der Azimutposition eingetreten ist.
- Aufzeichnung der Anzahl an Rotorumdrehungen, während denen die Messgröße auf Veränderung geprüft wurde.

Die letzten drei Schritte können beispielhaft wie folgt ausgeführt werden:
1. Prüfung alle 100ms, ob sich die gemessene Azimutposition seit dem letzten Zeitschritt verändert hat.
2. Falls eine Änderung der Azimutposition eingetreten ist, Zwischenspeichern der Rotorposition, wo dies erfolgte.
3. Aufzeichnen der Ergebnisse aus 1. und 2. in einem Datenfeld. Veranschaulichend kann das für jede darstellbare Rotorposition (aus 2.) eine "Strichliste" darstellen. Wurde in 1. eine Rechtsdrehung erkannt, wird ein Strich ergänzt, und bei Linksdrehungen wird ein Strich abgezogen.

Es können dann die weiteren Schritte folgen:
- Normierung der Häufigkeit von beobachteten Änderungen mit der Anzahl beobachteter Rotorumdrehungen, also Mittelwertbildung, um von "Strichen" auf "Mittlere Anzahl an Strichen pro Rotorumdrehung" zu kommen, um es anschaulich zu erläutern.
- Berechnung von Amplitude und Phase einer 1P-Frequenzkomponente in dem normierten Häufigkeitssignal.
- Optional: Regelmäßige Wiederholungsausführung des gesamten Verfahrens zur unabhängigen Bestätigung früherer Unwuchterkennungen, bzw. Beobachtung der zeitlichen Veränderung der Rotorunwucht (z.B. vor/nach Wartungsarbeiten).
- Ausgabe des Berechnungsergebnisses

Das Verfahren eignet sich somit zur Erkennung von Rotorunwuchten, insbesondere Blattwinkelfehlstellungen und Massenunwuchten. Auch Massenunwuchten des Rotors können eine Azimutbewegung hervorrufen. Da der Rotor mit seiner Rotorkreisfläche einige Meter vor der Turmmitte, und damit auch vor dem Azimutlager ist, bewirken umlaufende Zentrifugalkräfte einer Unwucht-Masse eine (ebenso umlaufende) Kraft auf das Azimutlager.

Das Verfahren eignet sich auch dazu, auf Anlagen aufmerksam zu machen, die mit Blattwinkelfehlstellungen oder Massenunwuchten betrieben werden. Dies wiederum ermöglicht eine Korrektur, welche im Falle von Blattwinkelfehlern durch eine Änderung der Nullposition des Blattwinkelgebers erreicht wird, und im Falle von Massenunwuchten durch Hinzufügen von Zusatzmassen.

Ein besonderer Vorteil der vorliegenden Erfindung ist, dass eine Erkennung insbesondere Von Blattwinkelfehlstellungen bei geschlossener Azimutbremse möglich ist.

Das Verfahren kann also auch bei gebremstem Azimutsystem genutzt werden, sofern das Spiel, also Lose, und die Steifigkeit im Antriebssystem des Azimutsystems trotzdem leichte Drehbewegungen zulassen, und diese gemessen werden können.

Ein weiterer Vorteil ist: Das Verfahren ermöglicht eine Erkennung von Blattwinkelfehlstellungen ohne genaues mathematisches Modell des Azimutsystems.

## Patentansprüche

1. Verfahren zum Bestimmen wenigstens einer Blattfehlstellung (Δα) eines Rotorblattes eines Rotors einer Windenergieanlage (100) mit mehreren in ihrem Blattwinkel verstellbaren Rotorblättern (108), wobei
- die Blattfehlstellung (Δα) eine Blattwinkelabweichung des Blattwinkels des Rotorblattes von einem Referenzblattwinkel beschreibt,
- die Windenergieanlage (100) eine Gondel (104) mit dem Rotor (106) und einer Azimutverstelleinrichtung aufweist, wobei
- eine umlaufende Drehposition des Rotors als Rotorposition bezeichnet wird, und
- die Azimutverstelleinrichtung wenigstens einen aktivierbaren Azimutaktuator aufweist, um die Gondel (104) in einer Azimutposition zu verstellen, und das Verfahren umfasst die Schritte
- in einem Erfassungsschritt (406) Erfassen einer Azimutbewegung der Gondel (104), während der wenigstens eine Azimutaktuator inaktiv ist, und
- in einem Bestimmungsschritt Bestimmen der Blattfehlstellung (Δα) in Abhängigkeit von der im Erfassungsschritt (406) erfassten Azimutbewegung,
**dadurch gekennzeichnet, dass**
- zum Erfassen der Azimutbewegung ein Azimutverlauf als Verlauf der Azimutposition über einen Rotorpositionsverlauf als Verlauf der Rotorposition aufgenommen wird, und
- zum Bestimmen der Blattfehlstellung (Δα) der Azimutverlauf in Abhängigkeit von dem Rotorpositionsverlauf ausgewertet wird.

2. Verfahren nach Anspruch 1,
**dadurch gekennzeichnet, dass**
in dem Erfassungsschritt (406) eine Azimutfeststellbremse betätigt ist, um ein Verstellen der Azimutposition zu verhindern.

3. Verfahren nach Anspruch 1 oder 2,
**dadurch gekennzeichnet, dass**
- in einem Prüfschritt (404) geprüft wird, ob eine, mehrere oder alle Erfassungsvoraussetzungen erfüllt sind aus der Liste aufweisend,
- der wenigstens eine Azimutaktuator ist inaktiv,
- eine bzw. die Azimutfeststellbremse ist betätigt,
- eine Pitcheinrichtung zum Verstellen der Blattwinkel ist inaktiv, und
- der Rotor (106) weist wenigstens eine vorbestimmbare Mindesterfassungsdrehzahl auf, wobei die Mindesterfassungsdrehzahl vorzugsweise wenigstens 25%, insbesondere wenigstens 40% einer Nenndrehzahl des Rotors beträgt.

4. Verfahren nach einem der vorstehenden Ansprüche,
**dadurch gekennzeichnet, dass**
- zum Erfassen der Azimutbewegung ein von der Rotorposition abhängiger Azimutverlauf als Verlauf der Azimutposition erfasst wird, und
- aus Charakteristika des Azimutverlaufs die Blattfehlstellung (Δα) bestimmt wird.

5. Verfahren nach einem der vorstehenden Ansprüche,
**dadurch gekennzeichnet, dass**
- aus einem bzw. dem Azimutverlauf eine 1P-Komponente berechnet wird, wobei
- die 1P-Komponente ein oszillierendes Signal mit einer Periode über eine Rotorumdrehung beschreibt, und
- basierend auf der 1P-Komponente die Blattfehlstellung (Δα) bestimmt wird, wobei insbesondere
- die 1P-Komponente mit einer Amplitude und einer auf die Rotorposition bezogenen Phase berechnet wird und/oder
- die 1P-Komponente mit Hilfe einer Fourier-Transformation aus dem Azimutverlauf bestimmt wird.

6. Verfahren nach einem der vorstehenden Ansprüche, **dadurch gekennzeichnet, dass**
- zur Auswertung des aufgenommenen Azimutverlaufs ein Integral über den Azimutverlauf aufgenommen wird, insbesondere über eine halbe Rotorumdrehung, und
- aus dem Integral eine Amplitude eines angenommenen sinusförmigen Azimutverlaufs bestimmt wird, insbesondere mit einer angenommenen Periodenlänge über eine Rotorumdrehung.

7. Verfahren nach einem der vorstehenden Ansprüche,
**dadurch gekennzeichnet, dass**
- ein bzw. der Azimutverlauf über mehrere Rotorumdrehungen aufgenommen wird, vorzugsweise über wenigstens 10 Umdrehungen, insbesondere über wenigstens 1000 Umdrehungen, und
- aus dem Azimutverlauf ein gemittelter Azimutverlauf für eine Rotorumdrehung berechnet wird, bei dem zu jeder Rotorposition jeweils alle zu dieser Rotorposition aufgenommenen Werte des Ausrichtungsverlaufs gemittelt oder anderweitig gefiltert werden.

8. Verfahren nach einem der vorstehenden Ansprüche,
**dadurch gekennzeichnet, dass**
- aus Azimutwerten als rotorpositionsabhängige Werte der erfassten Azimutbewegung durch Vergleich mit in Voruntersuchungen aufgenommenen Azimutwerten die wenigstens eine Blattfehlstellung (Δα) bestimmt wird, wobei insbesondere
- zu Amplitude und Phase einer aus der erfassten Azimutbewegung bzw. aus dem Azimutverlauf abgeleiteten 1P-Komponente in einer Tabelle jeweils Blattfehlstellungswerte der Rotorblätter (108) hinterlegt sind.

9. Verfahren nach einem der vorstehenden Ansprüche,
**dadurch gekennzeichnet, dass**
- die Azimutverstelleinrichtung zum Verstellen der Gondel (104) ein Getriebe mit einer Getriebeelastizität aufweist,
- wobei das Getriebe zwischen einem Ritzel einerseits, das an einem Zahnkranz angreift, und dem Azimutaktuator und/oder einer bzw. der Azimutbremse andererseits angeordnet ist, sodass
- die Getriebeelastizität bei inaktivem Azimutaktuator bzw. betätigter Azimutbremse die erfasste Azimutbewegung zulässt, und/oder dass
- eine Getriebelose zwischen Ritzel und Zahnkranz vorgesehen ist.

10. Verfahren nach einem der vorstehenden Ansprüche,
**dadurch gekennzeichnet, dass**
- wenigstens der Erfassungsschritt (406) und der Bestimmungsschritt jeweils nach einer vorbestimmbaren Wartezeit und/oder einem anderen vorgebbaren Anlass wiederholt werden, um eine mögliche Veränderung der bestimmten Blattfehlstellung (Δα) zu überprüfen, wobei insbesondere
- die vorbestimmbare Wartezeit wenigstens einen Monat, insbesondere wenigstens ein halbes Jahr beträgt.

11. Windenergieanlage (100), vorbereitet zum Bestimmen wenigstens einer Blattfehlstellung (Δα) eines Rotorblattes eines Rotors der Windenergieanlage (100) mit mehreren in ihrem Blattwinkel verstellbaren Rotorblättern (108), wobei
- die Blattfehlstellung (Δα) eine Blattwinkelabweichung des Blattwinkels des Rotorblattes von einem Referenzblattwinkel beschreibt,
- die Windenergieanlage (100) eine Gondel (104) mit dem Rotor (106) und einer Azimutverstelleinrichtung aufweist, wobei
- eine umlaufende Drehposition des Rotors als Rotorposition bezeichnet wird, und
- die Azimutverstelleinrichtung wenigstens einen aktivierbaren Azimutaktuator aufweist, um die Gondel (104) in einer Azimutposition zu verstellen, wobei
- die Windenergieanlage (100)
- eine Erfassungseinrichtung aufweist, um in einem Erfassungsschritt (406) eine Azimutbewegung der Gondel (104) zu erfassen, während der wenigstens eine Azimutaktuator inaktiv ist, und
- eine Recheneinheit aufweist, um in einem Bestimmungsschritt die Blattfehlstellung (Δα) in Abhängigkeit von der im Erfassungsschritt (406) erfassten Azimutbewegung zu bestimmen,
**dadurch gekennzeichnet, dass** die Windenergieanlage dazu vorbereitet ist,
- zum Erfassen der Azimutbewegung einen Azimutverlauf als Verlauf der Azimutposition über einen Rotorpositionsverlauf als Verlauf der Rotorposition aufzunehmen, UND
- zum Bestimmen der Blattfehlstellung (Δα) den Azimutverlauf in Abhängigkeit von dem Rotorpositionsverlauf auszuwerten.

12. Windenergieanlage (100) nach Anspruch 11, **dadurch gekennzeichnet, dass**
- die Windenergieanlage (100) eine Steuereinheit aufweist, und dass
- die Windenergieanlage (100), insbesondere die Steuereinheit dazu vorbereitet ist, ein Verfahren nach einem Ansprüche 1 bis 10 auszuführen.

## Claims

1. Method for determining at least one blade misposition (Δα) of a rotor blade of a rotor of a wind power installation (100) having multiple rotor blades (108) with an adjustable blade angle, wherein
- the blade misposition (Δα) describes a blade angle variance of the blade angle of the rotor blade from a reference blade angle,
- the wind power installation (100) has a nacelle (104) having the rotor (106) and an azimuth adjustment device, wherein
- a circumferential rotational position of the rotor is referred to as the rotor position, and
- the azimuth adjustment device has at least one activable azimuth actuator in order to adjust an azimuthal position of the nacelle (104), and the method comprises the steps of
- a detection step (406) comprising detecting an azimuthal movement of the nacelle (104) while the at least one azimuth actuator is inactive, and
- a determination step comprising determining the blade misposition (Δα) on the basis of the azimuthal movement detected in the detection step (406),
**characterized in that**
- the azimuthal movement is detected by recording an azimuth response as the response of the azimuthal position over a rotor position response as the response of the rotor position, and
- the blade misposition (Δα) is determined by evaluating the azimuth response on the basis of the rotor position response.

2. Method according to Claim 1,
**characterized in that**
an azimuth locking brake has been operated in the detection step (406) in order to prevent the azimuthal position from being adjusted.

3. Method according to Claim 1 or 2,
**characterized in that**
- a checking step (404) comprises checking whether one, multiple or all detection prerequisites are met from the list comprising
- the at least one azimuth actuator is inactive,
- a or the azimuth locking brake has been operated,
- a pitch device for adjusting the blade angles is inactive, and
- the rotor (106) has at least one predeterminable minimum detection speed, the minimum detection speed preferably being at least 25%, in particular at least 40%, of a rated speed of the rotor.

4. Method according to one of the preceding claims,
**characterized in that**
- the azimuthal movement is detected by detecting an azimuth response dependent on the rotor position as the response of the azimuthal position, and
- characteristics of the azimuth response are used to determine the blade misposition (Δα).

5. Method according to one of the preceding claims,
**characterized in that**
- a or the azimuth response is used to compute a 1P component, wherein
- the 1P component describes an oscillating signal with a period over one rotor revolution, and
- the 1P component is taken as a basis for determining the blade misposition (Δα), wherein in particular
- the 1P component is computed using an amplitude and a phase related to the rotor position and/or
- the 1P component is determined from the azimuth response by using a Fourier transformation.

6. Method according to one of the preceding claims, **characterized in that**
- the recorded azimuth response is evaluated by recording an integral over the azimuth response, in particular over half of one rotor revolution, and
- the integral is used to determine an amplitude of an assumed sinusoidal azimuth response, in particular with an assumed period length over one rotor revolution.

7. Method according to one of the preceding claims,
**characterized in that**
- a or the azimuth response is recorded over multiple rotor revolutions, preferably over at least 10 revolutions, in particular over at least 1000 revolutions, and
- the azimuth response is used to compute an averaged azimuth response for one rotor revolution, involving averaging or otherwise filtering, for each rotor position, all respective values of the orientation response that have been recorded for this rotor position.

8. Method according to one of the preceding claims,
**characterized in that**
- azimuthal values as rotor-position-dependent values of the detected azimuthal movement are used to determine the at least one blade misposition (Δα) by way of comparison with azimuthal values recorded in preliminary investigations, wherein in particular
- respectively blade misposition values of the rotor blades (108) are stored in a table for the amplitude and phase of a 1P component inferred from the detected azimuthal movement or from the azimuth response.

9. Method according to one of the preceding claims,
**characterized in that**
- the azimuth adjustment device has a transmission having a gear elasticity for adjusting the nacelle (104),
- wherein the transmission is arranged between a pinion, on the one hand, which engages with a ring gear, and the azimuth actuator and/or a or the azimuth brake, on the other hand, with the result that
- the gear elasticity permits the detected azimuthal movement when the azimuth actuator is inactive or when the azimuth brake has been operated, and/or **in that**
- there is provision for a gear slack between the pinion and the ring gear.

10. Method according to one of the preceding claims,
**characterized in that**
- at least the detection step (406) and the determination step are each repeated after a predeterminable waiting period and/or another predefinable event in order to verify a possible change in the determined blade misposition (Δα), wherein in particular
- the predeterminable waiting period is at least one month, in particular at least half a year.

11. Wind power installation (100), ready to determine at least one blade misposition (Δα) of a rotor blade of a rotor of the wind power installation (100) having multiple rotor blades (108) with an adjustable blade angle, wherein
- the blade misposition (Δα) describes a blade angle variance of the blade angle of the rotor blade from a reference blade angle,
- the wind power installation (100) has a nacelle (104) having the rotor (106) and an azimuth adjustment device, wherein
- a circumferential rotational position of the rotor is referred to as the rotor position, and
- the azimuth adjustment device has at least one activable azimuth actuator in order to adjust an azimuthal position of the nacelle (104), wherein
- the wind power installation (100)
- has a detection device in order to use a detection step (406) to detect an azimuthal movement of the nacelle (104) while the at least one azimuth actuator is inactive, and
- has a computing unit in order to use a determination step to determine the blade misposition (Δα) on the basis of the azimuthal movement detected in the detection step (406),
**characterized in that** the wind power installation is configured
- for detecting the azimuthal movement recording an azimuth response as the response of the azimuthal position over a rotor position response as the response of the rotor position, and
- for determining the blade misposition (Δα) evaluating the azimuth response on the basis of the rotor position response.

12. Wind power installation (100) according to Claim 11, **characterized in that**
- the wind power installation (100) has a control unit, and **in that**
- the wind power installation (100), in particular the control unit, is ready to carry out a method according to one of Claims 1 to 10.

## Revendications

1. Procédé de détermination d'au moins un désalignement de pale (Δα) d'une pale de rotor d'un rotor d'une éolienne (100) avec plusieurs pales de rotor (108) à angle de pale réglable, dans lequel
- le désalignement de pale (Δα) décrit un écart d'angle de pale de l'angle de pale de la pale de rotor par rapport à un angle de pale de référence,
- l'éolienne (100) présente une nacelle (104) avec le rotor (106) et un dispositif de réglage d'azimut, dans lequel
- une position de rotation circulaire du rotor est appelée position de rotor, et
- le dispositif de réglage d'azimut présente au moins un actionneur d'azimut activable pour régler la nacelle (104) dans une position d'azimut, et le procédé comprend les étapes
- dans une étape de détection (406), de détection d'un mouvement d'azimut de la nacelle (104) pendant lequel au moins un actionneur d'azimut est inactif, et
- dans une étape de détermination, de détermination du désalignement de pale (Δα) en fonction du mouvement d'azimut détecté dans l'étape de détection (406),
**caractérisé en ce que**
- pour détecter le mouvement d'azimut, une variation d'azimut est enregistrée comme variation de la position d'azimut via une variation de position de rotor comme variation de la position de rotor, et
- pour déterminer le désalignement de pale (Δα), la variation d'azimut est évaluée en fonction de la variation de position de rotor.

2. Procédé selon la revendication 1,
**caractérisé en ce que**
dans l'étape de détection (406), un frein de blocage d'azimut est actionné pour empêcher un réglage de la position d'azimut.

3. Procédé selon la revendication 1 ou 2,
**caractérisé en ce que**
- dans une étape de vérification (404), on vérifie si une, plusieurs ou toutes les conditions de détection sont remplies dans la liste présentant
- l'au moins un actionneur d'azimut est inactif,
- un ou le frein de blocage d'azimut est actionné,
- un système de pas variable pour régler l'angle de pale est inactif, et
- le rotor (106) présente au moins une vitesse de détection minimale pouvant être prédéterminée, dans lequel la vitesse de détection minimale est de préférence d'au moins 25 %, en particulier d'au moins 40 % d'une vitesse nominale du rotor.

4. Procédé selon l'une quelconque des revendications précédentes,
**caractérisé en ce que**
- pour détecter le mouvement d'azimut, une variation d'azimut dépendante de la position de rotor est détectée comme variation de la position d'azimut, et
- le désalignement de pale (Δα) est déterminé à partir des caractéristiques de la variation d'azimut.

5. Procédé selon l'une quelconque des revendications précédentes,
**caractérisé en ce que**
- une composante 1P est calculée à partir d'une ou de la variation d'azimut, dans lequel
- la composante 1P décrit un signal oscillant avec une période sur un tour de rotor, et
- le désalignement de pale (Δα) est déterminé sur la base de la composante 1P, dans lequel en particulier
- la composante 1P est calculée avec une amplitude et une phase par rapport à la position de rotor et/ou
- la composante 1P est déterminée à l'aide d'une transformation de Fourier à partir de la variation d'azimut.

6. Procédé selon l'une quelconque des revendications précédentes, **caractérisé en ce que**
- pour l'évaluation de la variation d'azimut enregistrée, une intégrale est enregistrée sur la variation d'azimut, en particulier sur un demi-tour de rotor, et
- une amplitude d'une variation d'azimut sinusoïdale supposée est déterminée à partir de l'intégrale, en particulier avec une longueur de période supposée sur un tour de rotor.

7. Procédé selon l'une quelconque des revendications précédentes,
**caractérisé en ce que**
- une ou la variation d'azimut est enregistrée sur plusieurs tours de rotor, de préférence sur au moins 10 tours, en particulier sur au moins 1000 tours, et
- à partir de la variation d'azimut, une variation d'azimut moyenne pour un tour de rotor est calculée, pour laquelle toutes les valeurs de la variation d'orientation enregistrées pour cette position de rotor sont respectivement moyennées ou filtrées d'une autre manière pour chaque position de rotor.

8. Procédé selon l'une quelconque des revendications précédentes,
**caractérisé en ce que**
- l'au moins un désalignement de pale (Δα) est déterminé à partir de valeurs d'azimut comme valeurs dépendantes de la position de rotor du mouvement d'azimut détecté par comparaison avec des valeurs d'azimut enregistrées dans des études préliminaires, dans lequel en particulier
- pour l'amplitude et la phase d'une composante 1P dérivée du mouvement d'azimut détecté ou de la variation d'azimut, des valeurs de désalignement de pale des pales de rotor (108) sont respectivement mises en mémoire dans un tableau.

9. Procédé selon l'une quelconque des revendications précédentes,
**caractérisé en ce que**
- le dispositif de réglage d'azimut pour le réglage de la nacelle (104) présente une transmission avec une élasticité de transmission,
- dans lequel la transmission est agencée entre un pignon d'une part, qui agit sur une couronne dentée, et l'actionneur d'azimut et/ou un ou le frein d'azimut d'autre part, de sorte que
- l'élasticité de transmission permet le mouvement d'azimut détecté lorsque l'actionneur d'azimut est inactif ou que le frein d'azimut est actionné, et/ou que
- un entraînement direct est prévu entre le pignon et la couronne dentée.

10. Procédé selon l'une quelconque des revendications précédentes,
**caractérisé en ce que**
- au moins l'étape de détection (406) et l'étape de détermination sont répétées à chaque fois après un temps d'attente pouvant être prédéterminé et/ou une autre occasion pouvant être prédéfinie pour vérifier une éventuelle modification du désalignement de pale (Δα) déterminé, dans lequel en particulier
- le temps d'attente pouvant être prédéterminé est d'au moins un mois, en particulier d'au moins six mois.

11. Éolienne (100), destinée à déterminer au moins un désalignement de pale (Δα) d'une pale de rotor d'un rotor de l'éolienne (100) avec plusieurs pales de rotor (108) à angle de pale réglable, dans laquelle
- le désalignement de pale (Δα) décrit un écart d'angle de pale de l'angle de pale de la pale de rotor par rapport à un angle de pale de référence,
- l'éolienne (100) présente une nacelle (104) avec le rotor (106) et un dispositif de réglage d'azimut, dans laquelle
- une position de rotation circulaire du rotor est appelée position de rotor, et
- le dispositif de réglage d'azimut présente au moins un actionneur d'azimut activable pour régler la nacelle (104) dans une position d'azimut, dans laquelle
- l'éolienne (100)
- présente un dispositif de détection pour détecter un mouvement d'azimut de la nacelle (104) dans une étape de détection (406) pendant laquelle au moins un actionneur d'azimut est inactif, et
- présente une unité de calcul pour déterminer, dans une étape de détermination, le désalignement de pale (Δα) en fonction du mouvement d'azimut détecté dans l'étape de détection (406),
**caractérisée en ce que** l'éolienne est destinée à
- pour détecter le mouvement d'azimut, enregistrer une variation d'azimut comme variation de la position d'azimut via une variation de position de rotor comme variation de la position de rotor, et
- pour déterminer le désalignement de pale (Δα), évaluer la variation d'azimut en fonction de la variation de position de rotor.

12. Éolienne (100) selon la revendication 11, **caractérisée en ce que**
- l'éolienne (100) présente une unité de commande, et que
- l'éolienne (100), en particulier l'unité de commande, est destinée à mettre en œuvre un procédé selon l'une quelconque des revendications 1 à 10.
